# EUROPEAN PATENT APPLICATION

(11) **EP 4 848 391 A1**
(43) Date of publication of application: **02.12.2026**
(21) Application number: 25179784.1
(22) Date of filing: 30.05.2025
(51) Int. Cl.: H01M 10/052, H01M 10/0562

(54) **SOLID-STATE ELECTROLYTE, A BATTERY, AND METHOD FOR MANUFACTURE THEREOF**

(71) Applicant: ECOLE POLYTECHNIQUE FEDERALE DE LAUSANNE (EPFL), 1015 Lausanne (CH)
(72) Inventor: SINGH THAKUR, Tushar, 1024 ECUBLENS VD (CH); ERCOLE, Loris, 1814 LA TOUR-DE-PEILZ (CH); MARZARI, Nicola, 1005 LAUSANNE (CH)
(74) Representative: Cohausz & Florack

(57) **Abstract**

Described herein is the use of an inorganic lithium-based material as a solid-state electrolyte, wherein the material is chosen from the group consisting of Li₂BeF₄, Li₁₀BrN₃, LiCF₃SO₃, LiBeP, Li₅Br₂N, Li₁₀Si₂PbO₁₀, Li₂ZnGeSe₄, LiGaSe₂, Li₅NaN₂, LiMoPO₆, LiSr₂Br₅, Li₂ZnBr₄, Li₂Ti₄O₉, Li₁₀B₁₄Cl₂O₂₅, LiY₂Ti₂S₂O₅, Li₂B₃PO₈, LiP₇, Li₂P₂PdO₇, Li₃AuS₂, Li₈Bi₂(MoO₄)₇, Li₂B₂Se₅, Li₈SeN₂, Li₄CO₄, Li₈TeN₂, Li₃Cs₂Br₅, Li₇NbO₆, Li₇NbS₆, LiY(MoO₄)₂, and Li₄Mo₃O₈. Also described are a solid-state battery and a method of producing a solid-state battery.

## Description

The present disclosure relates to materials suitable as solid-state electrolytes. In particular, the present disclosure relates to the use of said materials as solid-state electrolytes, to solid-state batteries comprising said solid-state electrolytes, and to a method of producing said solid-state batteries.

All-solid-state Li-ion batteries (ASSLBs), also referred to hereinafter as "solid-state-batteries", have been quickly gaining traction in the field of sustainable energy for the past few decades, particularly for applications in electric vehicles and mobile devices. This growing interest is primarily attributed to ASSLBs' higher energy densities and enhanced safety profiles compared to their conventional liquid counterparts. Besides this, ASSLBs' lightweight nature facilitates improved battery miniaturisation and easier assembly process, and they exhibit superior mechanical, thermal and electrochemical stability.

The core structural difference between conventional batteries and ASSLBs lies in the electrolyte on which the respective batteries are based. Conventional lithium-ion batteries utilize liquid or gel-like electrolytes to facilitate the movement of ions between the anode and cathode during charge and discharge cycles. These electrolytes, often composed of organic solvents and lithium salts, provide high ionic conductivity but pose several challenges, including leakage, flammability, and limited thermal stability. In contrast, solid-state batteries employ solid-state electrolytes, i.e. electrolytes free of liquid components, which can for example be made from ceramic, glass, polymer-based or other suitable materials. These solid electrolytes offer significant advantages over their liquid counterparts, including enhanced safety due to their non-flammable nature, improved thermal stability, and the potential for higher energy densities. The solid-state structure also allows for the use of lithium metal anodes, which can further increase the energy capacity of the battery. The transition from liquid or gel-like electrolytes to solid-state electrolytes represents a fundamental shift in battery technology, addressing key limitations of conventional batteries and paving the way for more efficient, safer, and higher-capacity energy storage solutions.

Known materials for solid-state electrolytes (SSEs) include phosphate based Li-containing materials and have been derived from NASICONs (Na Super Ionic CONductors) with structure formula LiM₂(PO₄)₃, wherein M = Ti or Zr. These so-called Li-NASICONs exhibit high Li-ion conductivity and continue to be subjects of ongoing research. Further examples include various inorganic families such as certain nitrides, halides, hydrides, perovskites with the general Formula La₃ₓLa_{2/3-x}TiO₃ and Li-argyrodites with the formula Li₆PS₅X, wherein X = Cl, Br or I. Another example is the family of Li-containing garnet structures having the chemical composition formula Li₅La₃M₂O₁₂, wherein M = Ta or Nb, which were identified to be promising conductors, albeit with limited ionic conductivity.

The approach of chemical substitution with aliovalent ions led to the discovery of Li₇La₃Zr₂O₁₂, commonly known as LLZO, a material which demonstrates significantly higher ionic conductivity than the aforementioned materials. The development of LLZO also serves as an example of chemical substitution in well-known ionic conductor families to explore the vast chemical space and identify new ionic conductors.

Another example is the extensively studied family of LISICONs (Li-superionic conductors) having the formula Li₁₄Zn(GeO₄)₄. Over time, numerous new LISICON-type materials were discovered, which can be represented with a more general formula of Li₄XO₄-Li₃YO₄, wherein X = Si, Ge or Ti; Y = P, As or V. LISICONs also serve as the precursor to the thio-LISICON family, which consists of a more polarisable sulphide anionic framework rather than an oxide sublattice, thereby enhancing their ionic conductivity.

Further substitution of the cations led to the discovery of tetragonal-Li₁₀GeP₂S₁₂ (LGPS), which is widely regarded as one of the best solid-state ionic conductors and has motivated the development of numerous promising derivative structures.

A desirable SSE material must fulfil a range of criteria, the most critical of which is that it must achieve high ionic conductivity at room temperature. Ionic conductivity refers to the ability of the electrolyte to conduct ions, such as lithium ions, between the anode and cathode during the charge and discharge cycles of a battery. High ionic conductivity is essential for efficient ion transport within the battery, as it directly impacts the battery's power output and overall performance, enabling faster charging and discharging rates. For example, a desired value for the ionic conductivity measured at room temperature (298 K) should be at least 1 mS/cm, ideally in the range of 1 to 10 mS/cm.

To prevent self-discharge in a battery, an SSE additionally ought to exhibit low electron mobility, which is determined by the material's electronic band gap. Desired SSE materials should therefore be electronic insulators having a band gap of at least 1 eV as an insulator.

Furthermore, an SSE material should have a low activation energy (also referred to as "activation barrier"), which refers to the minimum energy required for ions to move through the material. In other words, the activation energy refers to the energy barrier that ions must overcome to conduct through the solid matrix. Therein, a lower activation energy generally results in a higher ionic conductivity, which is advantageous. Desired SSE materials should have an activation energy of 0.2 eV or less.

Another important property of an SSE material is its electrochemical stability, i.e. its ability to remain chemically stable and resist decomposition or degradation when subjected to the electrochemical conditions present in a battery, such as voltage and current. While a broad electrochemical stability window is desirable for SSEs, many currently utilised electrolytes exhibit narrow stability windows, such as LGPS. If an SSE material lacks electrochemical stability, it must be stabilised, e.g. with interphases and/or protective coatings.

In addition, an SSE material of choice should have a low interfacial resistance with electrodes, i.e. it should provide for low resistance to ion flow at the interface between the solid-state electrolyte and the electrode materials, and it should have interfacial compatibility with said materials, i.e. provide for sufficient chemical and mechanical stability at the interface between the solid-state electrolyte and the electrode materials. A lack in any of these criteria can be mitigated by incorporating appropriate interfacial materials.

Despite the significant attention solid-state batteries have received, no known solid-state material satisfies all requirements needed for wide-spread application, including high ionic conductivity. While many structural families of such materials have been identified, progress remains slow, underscoring the tremendous need for new solutions for electrolytes in ASSLBs.

Against this background, it is an object of the present invention to provide solid-state electrolyte materials for solid-state batteries that should preferably achieve a high ionic conductivity at low temperatures such as room temperature.

The object named above is solved in accordance with the present invention by the use of an inorganic lithium-based material as a solid-state electrolyte, wherein the material is chosen from the group consisting of Li₂BeF₄, Li₁₀BrN₃, LiCF₃SO₃, LiBeP, Li₅Br₂N, Li₁₀Si₂PbO₁₀, Li₂ZnGeSe₄, LiGaSe₂, Li₅NaN₂, LiMoPO₆, LiSr₂Br₅, Li₂ZnBr₄, Li₂Ti₄O₉, Li₁₀B₁₄Cl₂O₂₅, LiY₂Ti₂S₂O₅, Li₂B₃PO₈, LiP₇, Li₂P₂PdO₇, Li₃AuS₂, Li₈Bi₂(MoO₄)₇, Li₂B₂Se₅, Li₈SeN₂, Li₄CO₄, Li₈TeN₂, Li₃Cs₂Br₅, Li₇NbO₆, Li₇NbS₆, LiY(MoO₄)₂, and Li₄Mo₃O₈.

In the context of the present disclosure, the term "inorganic" is intended to refer to materials that do not contain carbon-hydrogen (C-H) bonds. Inorganic materials are often derived from minerals and include a wide range of compounds such as oxides, sulfides, phosphates, and nitrides. Preferably, inorganic materials are free of organic electrolyte materials such as polyethylene oxides, polyvinylidene fluorides, polyacrylonitriles, polycarbonates, poly(methyl methacrylate) and poly(ethylene glycol).

The research leading up to the invention has discovered that the materials provided in the present disclosure are all suitable for use as solid-state electrolytes.

According to an embodiment of the use of the invention, the material is chosen from the group consisting of Li₂BeF₄, Li₁₀BrN₃, LiCF₃SO₃, LiBeP, Li₅Br₂N, Li₁₀Si₂PbO₁₀, Li₂ZnGeSe₄, LiGaSe₂, LiMoPO₆, LiSr₂Br₅, Li₂ZnBr₄, Li₂Ti₄O₉, Li₁₀B₁₄Cl₂O₂₅, LiY₂Ti₂S₂O₅, Li₂B₃PO₈, LiP₇, Li₂P₂PdO₇, Li₃AuS₂, Li₈Bi₂(MoO₄)₇, Li₂B₂Se₅, and Li₃Cs₂Br₅.

Among the materials found, a first group of materials was found to have a high lithium-ion diffusion and, thus, a high ionic conductivity only at elevated temperatures of 1000 K, while exhibiting an activation energy of >0.25 eV. This first group of materials consists of Li₂BeF₄, Li₁₀BrN₃, LiCF₃SO₃, LiBeP, Li₅Br₂N, Li₁₀Si₂PbO₁₀, Li₂ZnGeSe₄, LiGaSe₂, LiMoPO₆, LiSr₂Br₅, Li₂ZnBr₄, Li₂Ti₄O₉, Li₁₀B₁₄Cl₂O₂₅, LiY₂Ti₂S₂O₅, Li₂B₃PO₈, LiP₇, Li₂P₂PdO₇, Li₃AuS₂, Li₈Bi₂(MoO₄)₇, and Li₂B₂Se₅. These materials may be used in batteries particularly suited for high temperature applications.

Moreover, a second group of materials was found to have especially favorable and preferred properties which render them especially suitable for use as solid-state electrolyte in a solid-state battery. All materials of the second group achieve a high ionic conductivity at room temperature, as well as a favorably low activation barrier. The second group of materials consists of Li₈SeN₂, Li₄CO₄, Li₈TeN₂, Li₃Cs₂Br₅, Li₇NbO₆, Li₇NbS₆, Li₅NaN₂, LiY(MoO₄)₂, and Li₄Mo₃O₈. Therefore, in one embodiment of the use according to the present disclosure, the material is chosen from the group consisting of Li₈SeN₂, Li₄CO₄, Li₈TeN₂, Li₃Cs₂Br₅, Li₇NbO₆, Li₇NbS₆, Li₅NaN₂, LiY(MoO₄)₂, and Li₄Mo₃O₈.

Within the second group of materials, a second subset of materials was found to have particularly favorable properties. Each of these materials achieved an ionic conductivity at room temperature of more than 20 mS/cm, while having an activation energy of less than 0.2 eV. The second subset of materials consists of Li₈SeN₂, Li₄CO₄, Li₇NbS₆, Li₈TeN₂, and Li₃Cs₂Br₅. Therefore, in one embodiment of the use according to the present disclosure, the material is chosen from the group consisting of LisSeNz, Li₄CO₄, Li₇NbS₆, Li₈TeN₂, and Li₃Cs₂Br₅.

Moreover, within the second group of materials, a third subset of materials was found to have particularly favorable properties. Each of these materials achieved an ionic conductivity at room temperature of less than 20 mS/cm but greater than 1 mS/cm, while having an activation energy of more than 0.2 eV, thereby exceeding the properties of LGPS. The third subset of materials consists of LiY(MoO₄)₂, Li₄Mo₃O₈, Li₇NbO₆, and Li₅NaN₂. Therefore, in one embodiment of the use according to the present disclosure, the material is chosen from the group consisting of LiY(MoO₄)₂, Li₄Mo₃O₈, Li₇NbO₆, and Li₅NaN₂.

According to another embodiment of the use of the invention, the material is chosen from the group consisting of LiY(MoO₄)₂, Li₄Mo₃O₈, Li₇NbO₆, Li₅NaN₂, Li₇NbS₆, Li₈SeN₂, and Li₈TeN₂.

According to another embodiment of the use of the invention, the material is chosen from the group consisting of LiY(MoO₄)₂, Li₄Mo₃O₈, Li₇NbO₆, Li₇NbS₆, Li₈SeN₂, and Li₈TeN₂.

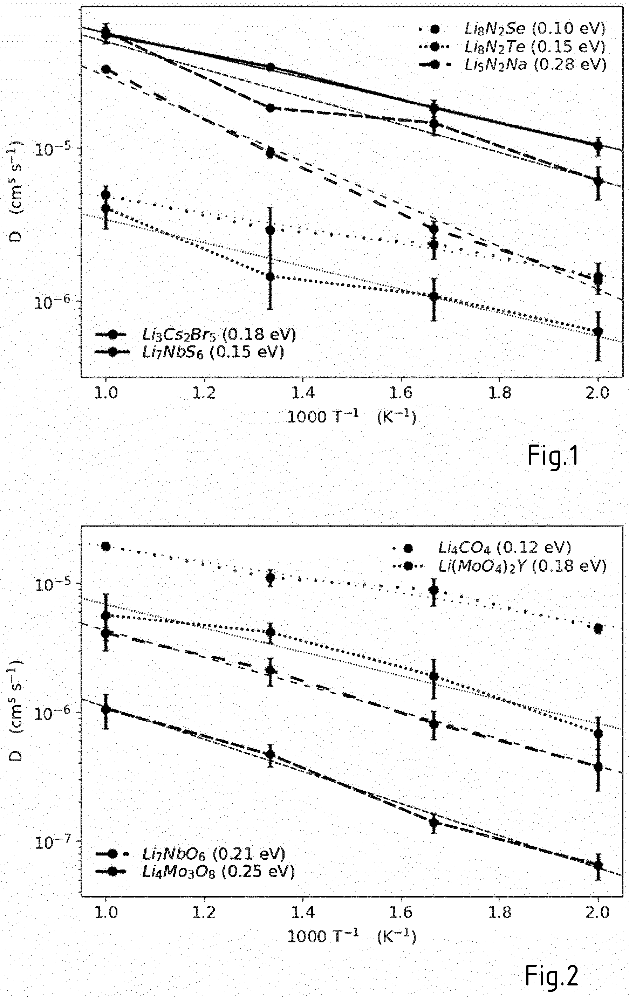

Particularly favorable materials found during the research underlying the present disclosure are lithium-based molybdenum oxides LiY(MoO₄)₂ and Li₄Mo₃O₈. Both molybdenum oxides exhibit high Li-ion conductivity at lower temperatures, as shown in Fig. 2, and low activation barriers. LiY(MoO₄)₂ exhibits a pronounced directional preference for Li-ion diffusion, confirming this material as an effective ionic conductor at lower temperatures. In Li₄Mo₃O₈, Li-ion diffusion occurs in a layered fashion, establishing this material as a strong 2-dimensional ionic conductor at lower temperatures. In an exemplary embodiment of the use according to the invention, the material is LiY(MoO₄)₂. In a further exemplary embodiment of the use according to the invention, the material is Li₄Mo₃O₈.

In a further embodiment of the use according to the invention, the material is Li₇NbO₆. First synthesised in 1969, this material has been the subject of various experimental studies, although it has never been investigated as a lithium ion conductor. In this material, lithium ion diffusion is believed to occur in a dispersed manner, establishing this material as a robust 3-dimensional ionic conductor at lower temperatures. It is characterized by excellent Li-ion conductivity at low temperatures and a low activation barrier which makes it exceptionally suitable as a solid-state electrolyte material. Li₇NbS₆, a derivative structure of Li₇NbO₆, exhibits a much higher ionic conductivity (around 10 times higher) than LGPS. Thus in a further embodiment of the use according to the present disclosure, the material is Li₇NbS₆.

Two further materials which are especially favorable to be used as solid-state electrolytes are Li₈SeN₂ and Li₈TeN₂. Both selenium and tellurium nitrides, which demonstrate excellent Li-ion diffusion at lower temperatures as shown in Fig. 1, were first synthesised in 2010. These are three-dimensional diffusers. Notably, Li₈SeN₂ exhibits the lowest activation barrier of 0.10 eV, among all the materials disclosed herein. In these materials, Li-ion diffusion is believed to occur in a dispersed manner, establishing them as robust 3-dimensional ionic conductors at lower temperatures. Therefore, in an embodiment of the use according to the present disclosure, the material is Li₈SeN₂. In a further embodiment of the use according to the present disclosure, the material is Li₈TeN₂.

Finally, there is Li₃Cs₂Br₅ which demonstrates high ionic conductivity and low activation barrier of 0.18 eV. It has been successfully synthesised before, but has not been explored as an ionic conductor. Therefore, in an embodiment of the use according to the present disclosure, the material is Li₃Cs₂Br₅.

The object named above is further solved in accordance with the present invention by a solid-state battery comprising, as solid-state electrolyte, at least one inorganic lithium-based material according to any embodiment of the present disclosure, and optionally at least one interfacial buffer layer.

Solid-state batteries are commonly known, and the solid-state electrolyte materials disclosed herein are generally compatible with known solid-state batteries. A typical solid-state battery comprises a cathode, an anode, and a solid-state electrolyte. In addition, a solid-state battery may comprise optional components such as interfacial layers, current collectors, one or more encapsulation layers, and/or other additives such as binders.

The phrase "as solid-state electrolyte" is intended to mean that the electrolyte comprises, as a primary conducting material for lithium ions, at least one material of the present disclosure. While the electrolyte may comprise other, known electrolyte materials in addition to the at least one material of the present disclosure, it is generally preferred that the electrolyte is free from such other electrolyte materials. In particular, the material of the present disclosure is responsible for lithium ion conduction.

Solid-state batteries comprising an electrolyte made from a material of the present disclosure are characterized by superior lithium ion conductivity even at lower temperatures.

The object named above is further solved in accordance with the present invention by a method for producing a solid-state battery according to the present disclosure, the method comprising:
a. providing a solid-state electrolyte comprising at least one lithium-based material according to the present disclosure;
b. forming a first electrode layer in contact with a first surface of the solid-state electrolyte;
c. forming a second electrode layer in contact with a second surface of the solid-state electrolyte;
d. assembling the first and second electrode layers with the solid-state electrolyte to form the solid-state battery, wherein the solid-state electrolyte serves as a medium for lithium-ion conduction between the first and second electrode layers;
e. optionally heat-treating the solid-state battery, for example at a temperature between 300 and 500 °C, for example for a duration of 1 to 10 hours.

**In** an exemplary embodiment, the method further comprises forming an interfacial buffer layer on one or both of the electrode layers to reduce interfacial resistance and improve electrochemical stability between the respective electrode and the solid-state electrolyte.

The individual embodiments of the use, the solid-state battery and the method according to the present disclosure are in each case individually applicable to these different aspects. The individual embodiments may furthermore be combined with each other at will.

Further features and advantages of the aspects of the present disclosure emerge from the following description of Examples where reference is made to the attached figures.

In the figures,
Fig. 1 shows diffusion coefficients derived from first-principles molecular dynamics (FPMD) simulations for the solid-state electrolyte materials Li₃Cs₂Br₅, Li₇NbS₆, Li₈SeN₂, Li₈TeN₂, and Li₅NaN₂ disclosed herein;
Fig. 2 shows diffusion coefficients derived from first-principles molecular dynamics (FPMD) simulations for the solid-state electrolyte materials Li₇NbO₆, Li₄Mo₃O₈, and Li₄CO₄, LiY(MoO₄)₂ disclosed herein;
Fig. 3 shows mean-square displacement (MSD) plots at 500 K for Li₃Cs₂Br₅ disclosed herein.
Fig. 4 shows mean-square displacement (MSD) plots at 500 K for LiCO₄ disclosed herein.
Fig. 5 shows mean-square displacement (MSD) plots at 500 K for Li₄Mo₃O₈ disclosed herein.
Fig. 6 shows mean-square displacement (MSD) plots at 500 K for Li₇NbO₆ disclosed herein.
Fig. 7 shows mean-square displacement (MSD) plots at 500 K for Li₈TeN₂ disclosed herein.
Fig. 8 shows mean-square displacement (MSD) plots at 500 K for Li₈SeN₂ disclosed herein.
Fig. 9 shows mean-square displacement (MSD) plots at 500 K for LiY(MoO₄)₂ disclosed herein.
Fig. 10 shows mean-square displacement (MSD) plots at 500 K for Li₅NaN₂ disclosed herein.
Fig. 11 shows mean-square displacement (MSD) plots at 500 K for Li₇NbS₆ disclosed herein.

### EXAMPLES

### Example 1: Identifying suitable solid-state electrolyte materials

The solid-state electrolyte materials disclosed herein were identified using a high-throughput computational screening of experimentally known structures sourced from Crystallography Open Database (COD), Inorganic Crystal Structure Database (ICSD) and Materials Platform for Data Science (MPDS) repositories.

The final step of the screening workflow was a set of first-principles molecular dynamics (FPMD) simulations at several temperatures to determine activation barriers of the materials of the present disclosure, and a set of molecular dynamics (MD) simulations to determine mean-square displacement (MSD) values, which were used to analyze ion transport and diffusion properties.

To run MD simulations, supercells were generated based on experimental geometries, ensuring a minimum separation of 8 Å between opposite faces. MD simulations were run with Born-Oppenheimer approximation in the canonical ensemble. Temperature was controlled with the stochastic velocity rescaling thermostat. From Einstein relation, the tracer diffusion coefficient Dₜᵣ can be formulated as in equation (1): $\begin{matrix}{D}_{tr} = {lim}_{t \to ∞} \frac{1}{6 t} {\left〈MSD\left(t\right)\right〉}_{NVT} \\ = {lim}_{t \to ∞} \frac{1}{6} \frac{d}{dt} \frac{1}{N} {\sum }_{i = 1}^{N} {\left〈{\left|{\vec{r}}_{i}\left(t+τ\right)-{\vec{r}}_{i}\left(τ\right)\right|}^{2}\right〉}_{τ}\end{matrix}$ (1) which is a derivative of the average mean-square displacement of particles with respect to time. In this context, essentially the ensemble average is substituted with a time average. By performing a linear regression of the mean square displacement MSD(t) with time, the diffusion coefficient can be accurately estimated from the slope of the MSD, ensuring sufficient statistical precision.

The tracer diffusion coefficient is related to the charge diffusion coefficient with Haven's ratio as H = Dₜᵣ/D_{σ}, which is a measure of correlated motion of the particles. The dilute limit is assumed to be 1, though in practice it is often less than 1, implying that correlated motion can enhance conductivity. Consequently, the conductivity is not overestimated. From the Nernst-Einstein equation, the ionic conductivity σ can be calculated as in equation (2): $σ = \frac{N {\left(Ze\right)}^{2}}{Ω {k}_{B} T} \frac{{D}_{tr}}{H}$ (2) where Ω is the system volume, T the temperature, and Ze is an integer multiple of the elementary charge. All analysis of trajectories including the calculation of MSD was done using the open-source tool Suite for Analysis of Molecular Simulations (SAMOS).

Promising structures were studied with FPMD at a temperature of 1000 K for 100 ps. Structures validated as fast ionic conductors in this initial setup were then studied at three lower temperatures: 750 K, 600 K and 500 K for 125 ps, 150 ps and 180 ps respectively. Longer simulation times are chosen to account for comparatively slower equilibration at lower temperatures. These temperatures were selected to be equidistant on the inverse temperature scale. Based on equation (1), the diffusion coefficient was determined and the statistical variance in diffusivity quantified. The activation barrier for these structures was estimated from a linear fit of the Arrhenius behaviour and the errors obtained with Bayesian propagation. For the most promising structures, the Li-ion probability density was plotted to better illustrate the Li-ion diffusion channels.

Using the workflow as described above, a first group of 22 materials was found that exhibit significant diffusion at 1000 K in the FPMD simulations, but not at lower temperatures. Consequently we were unable to resolve activation energy with significant statistical certainty. The following Table 1 provides an overview of their respective ionic conductivity at 1000 K.

**Table 1: Ionic conductivities at 1000 K.**

| **Structure** | **Ionic conductivity at 1000 K (mS/cm)** |
|---|---|
| Li₂BeF₄ | 1822 |
| Li₂Ti₄O₉ | 1348 |
| LiY₂Ti₂S₂O₅ | 1251 |
| Li₁₀BrN₃ | 886 |
| Li₃Cs₂Br₅ | 594 |
| LiCF₃SO₃ | 384 |
| Li₂ZnBr₄ | 357 |
| LiBeP | 356 |
| Li₅Br₂N | 344 |
| Li₁₀Si₂PbO₁₀ | 342 |
| Li₂ZnGeSe₄ | 291 |
| LiSr₂Br₅ | 263 |
| LiGaSe₂ | 173 |
| LiP₇ | 133 |
| LiMoPO₆ | 132 |
| Li₁₀B₁₄Cl₂O₂₅ | 65 |
| Li₂P₂PdO₇ | 48 |
| Li₂B₃PO₈ | 41 |
| Li₂B₂Se₅ | 20 |
| Li₈Bi₂(MoO₄)₇ | 12 |
| Li₃AuS₂ | 8 |

It is immediately clear from the data above that all materials achieve a favorable ionic conductivity only at high temperatures, but not at low temperatures. They are thus suitable for application in high temperature energy storage devices.

By the same workflow as described above, a second group of materials was identified which achieved high ionic conductivity even at low temperatures which allowed for a more confident estimation of activation barriers. Fig. 1 illustrates diffusion coefficients derived from the FPMD simulations for the materials Li₃Cs₂Br₅ (dashed line with long dashes and short spaces), Li₇NbS₆ (solid line), Li₈SeN₂ (dotted line with long spaces), Li₈TeN₂ (dotted line with short spaces), and Li₅NaN₂ (dashed line with short dashes and long spaces). The different straight lines for each curve represent the best-fit line, respectively, with the slope corresponding to the activation barriers, indicated in brackets (eV). Fig. 2 illustrates diffusion coefficients derived from the FPMD simulations for the materials Li₇NbO₆ (dashed line with long dashes and long spaces), Li₄Mo₃O₈ (dashed line with long dashes and short spaces), Li₄CO₄ (dotted line with long spaces), and LiY(MoO₄)₂ (dotted line with short spaces). The different straight lines for each curve represent the best-fit line, respectively, with the slope corresponding to the activation barriers, indicated in brackets (eV). In the Figures, a curve appearing more towards the top indicates a faster ion conductor while a flatter (i.e. not steep) curve indicates lower activation energy, which is favorable for application as an electrolyte material.

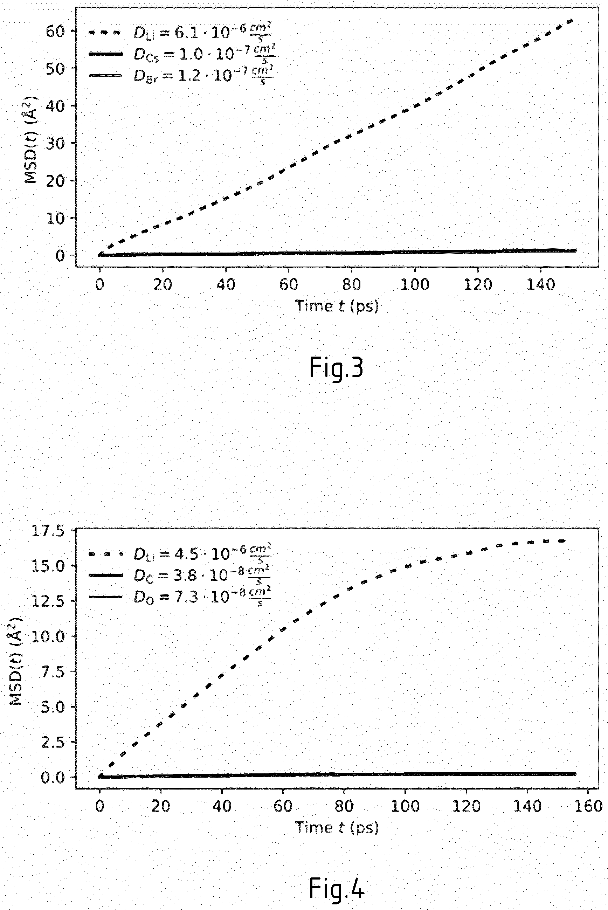

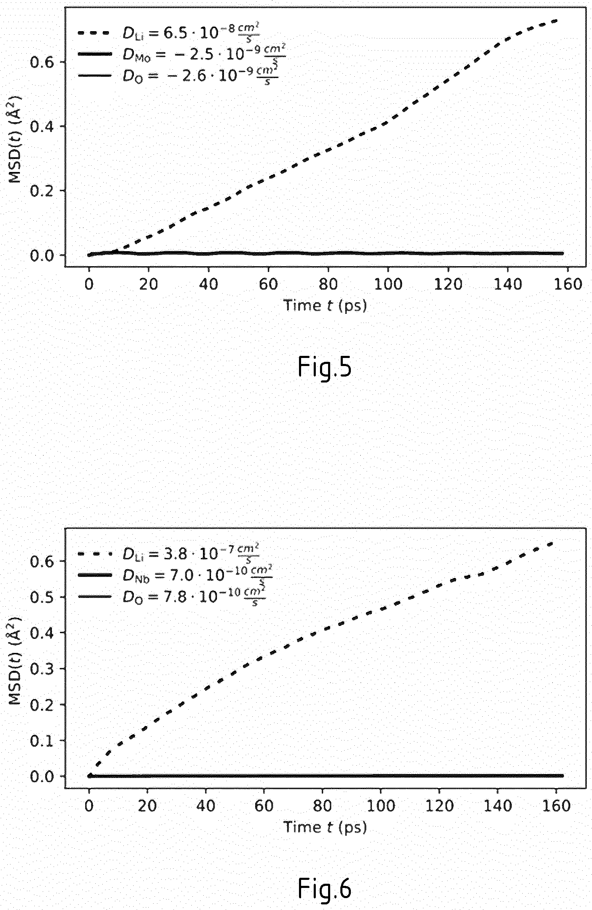

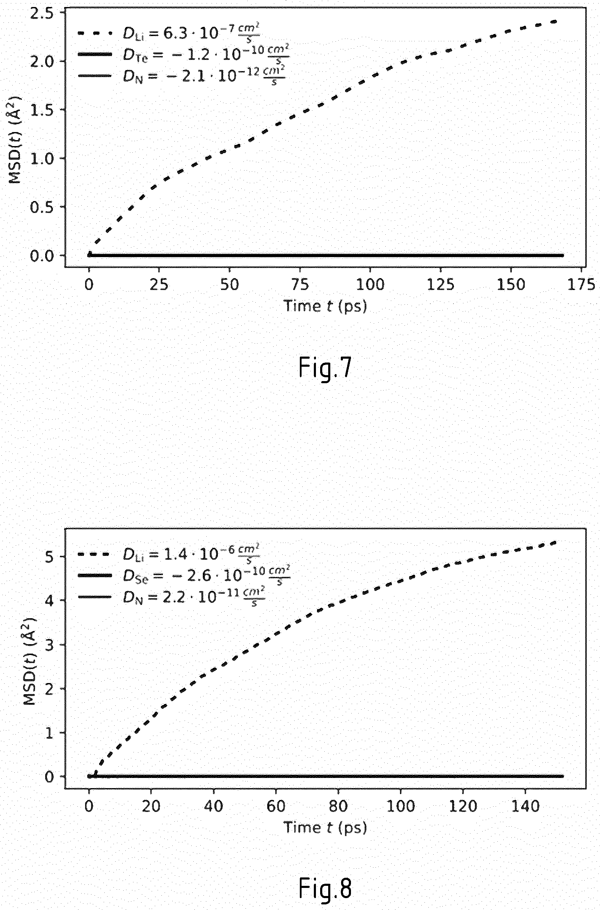

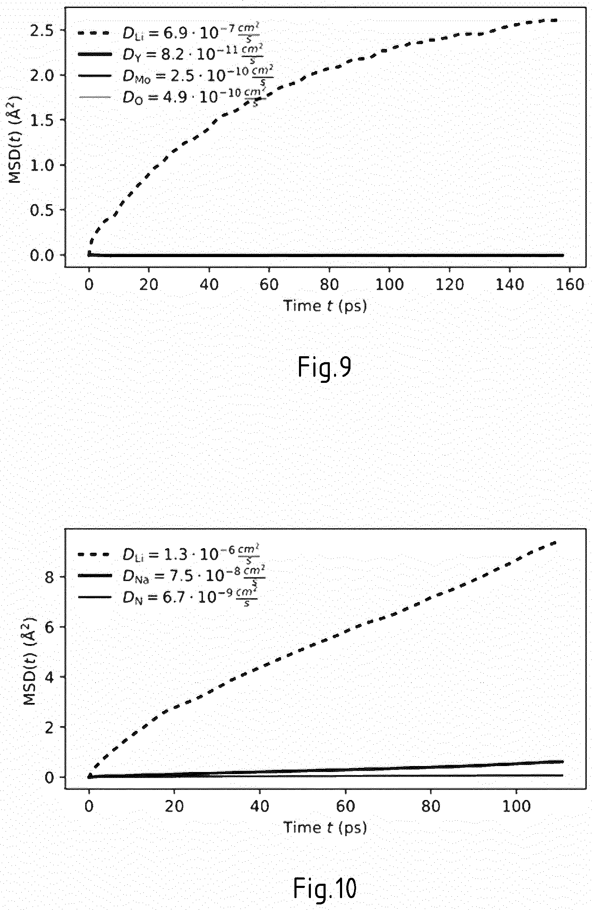

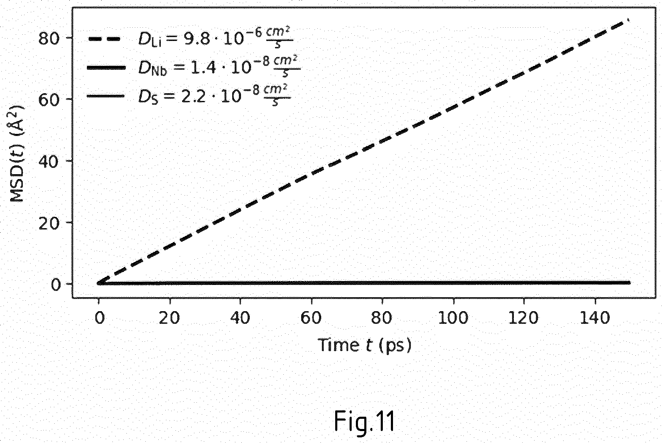

In addition, Figs. 3 to 11 show that the materials of the present disclosure also achieve a high ionic conductivity at low temperatures. Shown are graphs obtained at a temperature of 500 K for the materials Li₃Cs₂Br₅ (Fig. 3), LiCO₄ (Fig. 4), Li₄Mo₃O₈ (Fig. 5), Li₇NbO₆ (Fig. 6), Li₈TeN₂ (Fig. 7), Li₈SeN₂ (Fig. 8), LiY(MoO₄)₂ (Fig. 9), Li₅NaN₂ (Fig. 10), Li₇NbS₆ (Fig. 11). All of these materials achieve an ionic conductivity of more than 1 mS/cm, with many compounds achieving values over 100 mS/cm at room temperature (obtained by extrapolating the Arrhenius plot to room temperature).

The example data shows that the materials identified by the present disclosure have very favorable properties for an application as solid-state electrolytes.

### Example 2: Production of a solid-state battery

A solid-state battery is assembled using commonly known electrodes and an electrolyte material according to the invention.

The process begins with the preparation of the necessary materials. A lithium metal anode is prepared, and a composite cathode material, such as lithium cobalt oxide (LiCoO₂) or lithium iron phosphate (LiFePO₄), is provided. The solid-state electrolyte material according to the invention is provided, ensuring it possesses the desired properties such as ionic conductivity and electrochemical stability.

The anode (also referred to as first electrode) is coated onto a cleaned and polished copper current collector. The cathode (also referred to as second electrode) is prepared by mixing the active material with a conductive additive, such as carbon black, and a binder, such as polyvinylidene fluoride (PVDF), to form a slurry. This slurry is then coated onto an aluminum foil current collector and dried to form the cathode electrode.

A thin film of the solid-state electrolyte material is formed using techniques such as tape casting, hot pressing, or solution casting. The film is ensured to have uniform thickness and good mechanical properties.

The battery is assembled by layering the anode, solid-state electrolyte film, and cathode in a sandwich structure, i.e. forming a first electrode layer in contact with a first surface of the solid-state electrolyte, and forming a second electrode layer in contact with a second surface of the solid-state electrolyte. The assembled cell is then encapsulated in a suitable packaging material to protect it from environmental factors and ensure mechanical stability.

An initial formation cycle is performed by charging and discharging the battery at a low current rate to stabilize the interfaces and ensure proper ion transport.

## Claims

1. Use of an inorganic lithium-based material as a solid-state electrolyte, wherein the material is chosen from the group consisting of Li₂BeF₄, Li₁₀BrN₃, LiCF₃SO₃, LiBeP, Li₅Br₂N, Li₁₀Si₂PbO₁₀, Li₂ZnGeSe₄, LiGaSe₂, Li₅NaN₂, LiMoPO₆, LiSr₂Br₅, Li₂ZnBr₄, Li₂Ti₄O₉, Li₁₀B₁₄Cl₂O₂₅, LiY₂Ti₂S₂O₅, Li₂B₃PO₈, LiP₇, Li₂P₂PdO₇, Li₃AuS₂, Li₈Bi₂(MoO₄)₇, Li₂B₂Se₅, Li₈SeN₂, Li₄CO₄, Li₈TeN₂, Li₃Cs₂Br₅, Li₇NbO₆, Li₇NbS₆, LiY(MoO₄)₂, and Li₄Mo₃O₈.

2. Use according to claim 1, wherein the material is chosen from the group consisting of Li₈SeN₂, Li₄CO₄, LiCsI₂, LisTeNz, Li₃Cs₂Br₅, Li₇NbO₆, Li₇NbS₆, Li₅NaN₂, LiY(MoO₄)₂, and Li₄Mo₃O₈.

3. Use according to any one of claims 1 or 2, wherein the material is chosen from the group consisting of Li₈SeN₂, Li₄CO₄, Li₇NbS₆, Li₈TeN₂, and Li₃Cs₂Br₅.

4. Use according to any one of claims 1 or 2, wherein the material is chosen from the group consisting of LiY(MoO₄)₂, Li₄Mo₃O₈, Li₇NbO₆, Li₅NaN₂, Li₇NbS₆, Li₈SeN₂, and Li₈TeN₂, in particular consisting of LiY(MoO₄)₂, Li₄Mo₃O₈, Li₇NbO₆, and Li₅NaN₂, or consisting of LiY(MoO₄)₂, Li₄Mo₃O₈, Li₇NbO₆, Li₇NbS₆, Li₈SeN₂, and Li₈TeN₂.

5. Use according to any one of claims 1, 2 or 4, wherein the material is LiY(MoO₄)₂.

6. Use according to any one of claims 1, 2 or 4, wherein the material is Li₄Mo₃O₈.

7. Use according to any one of claims 1 to 4, wherein the material is Li₇NbO₆.

8. Use according to any one of claims 1 to 4, wherein the material is Li₈SeN₂.

9. Use according to any one of claims 1 to 4, wherein the material is Li₈TeN₂.

10. Use according to any one of claims 1 to 4, wherein the material is Li₇NbS₆.

11. Solid-state battery comprising, as solid-state electrolyte:
- at least one inorganic lithium-based material according to any one of the preceding claims, and
- optionally at least one interfacial buffer layer.

12. Method for producing a solid-state battery according to claim 11, comprising:
a. providing a solid-state electrolyte comprising at least one lithium-based material according to any one of claims 1 to 10;
b. forming a first electrode layer in contact with a first surface of the solid-state electrolyte;
c. forming a second electrode layer in contact with a second surface of the solid-state electrolyte;
d. assembling the first and second electrode layers with the solid-state electrolyte to form the solid-state battery, wherein the solid-state electrolyte serves as a medium for lithium-ion conduction between the first and second electrode layers;
e. optionally heat-treating the solid-state battery, for example at a temperature between 300 and 500 °C, for example for a duration of 1 to 10 hours.

13. The method according to claim 12, further comprising forming an interfacial buffer layer on one or both of the electrode layers to reduce interfacial resistance between the respective electrode and the solid-state electrolyte.
